(19) Europäisches Patentamt

European Patent Office

Office européen des brevets

(11) **EP 0 630 031 B1**

(12) **EUROPEAN PATENT SPECIFICATION**

(45) Date of publication and mention
of the grant of the patent:
**14.08.2002 Bulletin 2002/33**

(51) Int Cl.7: **H01C 17/06**

(21) Application number: **94107928.7**

(22) Date of filing: **24.05.1994**

(54) **Water cleanable thick film paste composition**

Mit Wasser reinigbare Dickfilmpastenzusammensetzung

Composition de pâte à couche épaisse nettoyable à l'eau

(84) Designated Contracting States:
**DE FR GB**

(30) Priority: **16.06.1993 US 77354**

(43) Date of publication of application:
**21.12.1994 Bulletin 1994/51**

(73) Proprietor: **E.I. DU PONT DE NEMOURS AND COMPANY**
**Wilmington Delaware 19898 (US)**

(72) Inventor: **Morrison, William Harvey, Jr.**
**Wilmington, Delaware 19809 (US)**

(74) Representative: **Kuhnen & Wacker**
**Patentanwaltsgesellschaft mbH,**
**Postfach 19 64**
**85319 Freising (DE)**

(56) References cited:
**EP-A- 0 456 409**     **EP-A- 0 485 910**
**EP-A- 0 527 352**     **US-A- 4 273 593**
**US-A- 4 872 928**     **US-A- 5 032 478**

# EP 0 630 031 B1

**Description**

<u>Field of Invention</u>

The invention is directed to improved thick film paste compositions and particularly to such compositions which are water cleanable and have good rheological characteristics for thick film printing.

<u>Background of the Invention</u>

Using thick film technology to add one or more thin layers of inorganic film onto a substrate is important in a variety of commercial applications including the manufacture of microelectronic circuits and automotive window defoggers. The layers are made by printing a thick film paste onto a substrate using a screen printer, drying the layer at low temperature (<200°C) to remove volatile solvents and then firing the layer at high temperature (>600°C) to remove all other noninorganic components and densify the inorganic components. Thick film microelectronic circuits are prepared by applying layers of conductor and dielectric to a substrate which is usually alumina. The layers of conductor are connected to each other through small holes (vias) in the dielectric layer which are filled with conductor. An alternative to separately firing each printed and dried layer is to print and dry several layers which are then fired together. This process is called cofiring. An example of separately firing each layer can be found in automotive window defogger technology. Typically the screenprinted conductor traces on the glass substrate are fired then decorative enamels are printed and fired.

Thick film pastes are dispersions of inorganic particles in a liquid vehicle phase. This vehicle phase contains predominantly polymers, solvents and other miscellaneous additives. The inorganic particles can be conductive (e.g., gold, silver, copper), dielectric (e.g., glass, refractory oxides) or resistive (e.g., $RuO_2$ pyrochlore). The polymer in a thick film paste serves at least the following functions: imparts proper printing rheology; provides good adhesion of the dried print to the substrate before firing and gives enough strength to the unfired composite so it will not crack or chip during handling prior to firing.

Today's thick film industry needs to conform to government regulations and develop systems eliminating the use of chlorinated organic solvents. Circuit makers have also required faster printing speeds to produce circuits at lower cost and in higher volumes. New electronic circuits are being designed with finer features so more functionality can be placed in smaller spaces and/or higher circuit transmission speeds can be attained. To manufacture these new circuits using thick film technology, dielectric pastes have to print smaller vias (openings between conductor layers) and conductor pastes will have to print finer lines. New generations of thick film paste products need to print with this higher resolution, but also at faster print speeds to meet these market needs. Environmental safety is an issue; therefore water instead of solvent cleanability is a sought after property in new generation pastes. The printing performance of thick film pastes is primarily controlled by the organic vehicle. Thick film pastes should be shear thinning (decreasing viscosity at increasing shear rate) during the printing process to enable the paste to rapidly pass through the screen and wet the substrate without excessive tackiness (which retards the snapback of the screen), yet once the paste has been applied to the substrate, the rate at which the paste viscosity recovers should be rapid enough to avoid loss of resolution of the fine features, such as lines and vias, but slow enough to permit leveling. Thick film pastes prepared using ethyl cellulose as the sole polymer cannot be formulated for applications requiring both high speed printing and high resolution due to their relatively slow recovery rate.

The polymer most commonly used in thick film pastes is ethyl cellulose. The ability to modify printing is restricted if ethyl cellulose is used because the printing is controlled to a great extent by the rheological properties imparted by the polymer to the paste. Most pastes are shear thinning (decreasing viscosity with increasing shear). The rate of recovery of the paste viscosity after the shear induced by the printing process is limited to a narrow range for pastes containing ethyl cellulose. To get resolution of fine features with these pastes, the viscosity of the paste has to be maintained at a high level. Pastes with viscosity in this range can not be printed at high speeds because the viscosity does not get low enough fast enough for efficient transfer of paste through the screen. The paste also tends to be tacky, causing the screen to stick to the printed part, especially at high print speeds. If the viscosity recovery rate of the paste could be controlled independently of the equilibrium viscosity, then much greater latitude would be possible in formulating high resolution, fast printing pastes. High speed printing rheological conditions suitable for use in the present invention are described in recently allowed U.S. Patent 5 242 623 entitled "Screen-Printable Thick Film Paste Composition" .

During the manufacture and use of thick film pastes, equipment (e.g., mixing, dispersing, and dispensing equipment, and screen printers and screens) must be cleaned to remove the residual thick film paste. Because the polymers and solvents most commonly used are not appreciably soluble in water, organic solvents must be used in the cleaning process. Water would be a most desirable cleaning solvent for the environment. The selection of a vehicle (polymer, solvents, other organic additives) for thick film pastes which is water cleanable must also satisfy all the other requirements mentioned above for a thick film polymer. In particular, the rheological characteristics must be about the same as current thick film pastes. This includes both the equilibrium viscosity and the rate of recovery of viscosity. The paste must also not dry out too quickly. If it does it can plug the holes in the screen used in making the circuit features, giving voided areas which lead to circuit failure. Although the environment to slow the evaporation rate of the paste after application to the screen printer could be controlled by engineering processes (e.g., atmosphere and temperature) this would be a substantial added cost to the manufacturers. A more desirable route would be to control the evaporation rate of the thick film paste so it is about the same as current materials with organic solvent cleanability.

Prior Art

Jacobs in U.S. 4,872,928 teaches both a water-cleanable solder paste consisting essentially of solder powder combined with low molecular weight water-soluble organic activators and polyethylene glycol solvents and a method for cleaning an electronic circuit which uses this paste. The method of cleaning is directed towards removal of solder from the completed electronic circuit board rather than the cleaning of paste manufacturing equipment or screens. Exemplified in the Jacobs' invention is an electronic circuit support to which electronic components have been soldered using the paste composition of the invention which is washed by spraying hot water (e.g., 150 to 200°C) to remove residual solder waste.

Nebe et al. in U.S. 5,032,478 teach an aqueous developable photosensitive gold conductor composition comprising finely divided inorganic particles of gold and inorganic binder, an organic polymeric binder, a photoinitiation system, photohardenable monomer, and an organic medium wherein the Improvement comprises the nature of the suitable organic polymeric binder. Nebe et al. teach that it is critical to choose a polymeric binder that is a copolymer or interpolymer containing at least 15 weight percent of acidic comonomer and having a molecular weight no greater than 50,000. In addition to these limits on the polymeric binder, this reference teaches a cleaning method to remove dried paste from the undeveloped areas of a circuit pattern that has been selectively imaged with actinic radition which requires use of an aqueous alkaline solution containing 0.8 weight % of sodium carbonate with pH >10.

EP-A-0 527 352 describes a thick film paste composition wherein finely divided inorganic particles are dispersed in an organic vehicle comprising butyl carbitol as an organic solvent and polyvinyl polymers dissolved therein.

Summary of the Invention

The present invention is directed to a thick film paste composition comprising:

finely divided inorganic particles dispersed in an organic vehicle comprising

(a) organic solvent; and
(b) organic polymer;

characterized in that;

(i) the polymer is polyvinylpyrrolidone and is contained in the total composition in an amount of 2-4%wt. and is dissolved in the organic vehicle; and

(ii) the organic solvent has an evaporation rate at least 2 times slower than water at 30°C and 1 atm; and

(iii) the total paste composition is water cleanable.

DETAILED DESCRIPTION OF THE INVENTION

A. Finely Divided Inorganic Particles

The invention can be used effectively in screen printable thick film pastes utilizing all types of finely divided inorganic particles. That is, the particles component of the compositions of the invention can be conductive, resistive, dielectric materials or inert silicas and pigments. The electric functionality of the particles does not itself affect the ability of the invention to overcome problems associated with printability, shrinkage and cracking. Thus, the invention is applicable to thick film resistor pastes in which the resistive materials may be metal oxides, conductive pastes in which the conductive material is a base or noble metal, and dielectric materials such as glasses, glass-ceramics and various oxides such as $BaTiO_3$ and the like. Suitable conductive metals include Pd, Ag, Au, Pt, Cu, Ni and mixtures and alloys thereof. Also, the invention extends to non-electrically functional pastes, such as enamels. For example, automotive enamels are primarily decorative but provide particular utility in blocking UV irradiation of the elastomeric or polymeric gasket material used to adhesively bond a window to a car body.

It will be recognized by those skilled in the thick film art that the precursors of such inorganic materials may be used as well as the materials themselves. As used in this context, the term "precursor" refers to a material other than the inorganic material which upon exposure to the firing conditions of the paste is converted to or otherwise changed with respect to electrical functionality. The particle size distribution of the inorganic materials is not itself critical with respect to the effectiveness of the invention. But, as a practical matter, it is preferred that the particle size of the particles be in the range of 0.1-10 microns and preferably 0.5-5 microns.

B. Organic Vehicle

1. In General: The main purpose of the organic vehicle is to disperse finely divided particles of the composition in such form that it can readily be applied to a ceramic or other substrate. Thus, the organic vehicle must first of all be one in which the particles are dispersible with an adequate degree of stability. Secondly, the rheological properties of the organic vehicle must be such that they lend good application properties to the dispersion.

The organic vehicle for most thick film compositions is typically a solution of polymer in a solvent and, frequently, a solvent solution containing both polymer and thixotropic agents for rheology enhancement. Optionally, other dissolved materials such as plasticizers, emulsifiers, wetting agents and dispersing aids may be added. In the present invention, surfactants optionally may be added to the vehicle to facilitate dispersion or emulsification of insoluble components contained in the vehicle when water is added during the cleaning step, thus facilitating water cleanability of the paste formulation. The polymer in the present invention is soluble in the organic vehicle and is preferable greater than 5% soluble in water to facilitate water cleanability of the paste composition. As used herein, "soluble" means dissolved, dispersed or emulsified.

Most thick film compositions are applied to a substrate by means of screen printing. Therefore, they must have appropriate viscosity so that they can be passed through the screen readily. In addition, they should be thixotropic in order that they set up rapidly after being screened, thereby giving good resolution. For thick film compositions suitable for high speed printing, the relaxation rate constant ($k_r$) for the paste is 0.01-0.1 and preferably 0.025-0.05. Paste $k_r$ values of 0.025 are considered optimum for most pastes which are screen printed rapidly, while $k_r$ values of 0.04 are considered optimum for most pastes which are used in very high resolution applications. The organic vehicle is preferably formulated also to give appropriate wettability of the particles and the substrate, good drying rate, dried film strength sufficient to withstand rough handling and good firing properties including adequate burnout of the residual organics. Satisfactory appearance of the fired composition is also important.

2. Solvents: Solvents suitable for the present invention must dissolve the polymer and have an evaporation rate at least two times slower than water under printing conditions. A more rapid solvent evaporation rate will result in unsatisfactory screen life of the paste due to the paste drying while it is present in a thin film on the screen. Evaporation of solvent from the paste composition during printing alters the paste rheology, negatively impacts printability, and, in the worst case, results in screen clogging. In addition, the solvent should preferably be grater than 20% soluble in water to facilitate the water cleanability of the paste composition. The solvents listed hereafter contain such characteristics: glycerol, tetraethylene glycol, polyethylene glycols, propylene glycol, butyl carbitol acetate, 2-methyl pentanediol, triethanol amine, ethylene glycol, 2-ethoxyethanol, 2-butoxyethanol, 2-butoxyethylacetate, N-methylpyrrolidone and amine or hydroxyamine. Various combinations of these and other solvents are formulated to obtain the desired viscosity and volatility requirements for each application.

3. Resin Component: Polymers in the present invention must have good solubility in both the low vapor pressure water soluble organic solvent and preferably be soluble in water to exhibit water cleanability of the paste composition. The resin also should be insensitive to pH and ionics. In particular, the polymer must not form a precipitate, salt, or coagulant with common anions and/or cations which may be present in the paste composition resulting in polymer flocculation when cleaned with water. It is preferred that the resin be insensitive to pH of the cleaning water over the pH range from 5 to 8. The preferred polymer used in compositions of the invention are polyvinylpyrrolidone (PVP) polymers. Several viscosity grades of PVP, ranging from very low to very high molecular weight can be utilized in the invention. PVP may be used alone or may be blended with polysaccharides. A preferred polysaccharide is hydroxypropylcellulose available from Aqualon of Wilmington, DE.

4. Other Vehicle Components: Among the thixotropic agents which are commonly used are hydrogenated castor oil and derivatives thereof. It is, of course, not always necessary to incorporate a thixotropic agent since the solvent/resin properties coupled with the shear thinning inherent in any suspension may alone be suitable in this regard. For example, PVP and hydroxypropylcellulose can optionally be used in combination with a flow modifier such as Floinducer® 15 to further impart the proper rheology for the paste to print properly. Floinducer® 15 is sold by Raybo Chemical Co., Huntington, WV.

The ratio of organic vehicle to particles in the dispersions can vary considerably and depends upon the manner in which the dispersion Is to be applied and the kind of organic vehicle used. Normally, to achieve good coverage, the dispersions will contain complementarily by weight 60-90% particles and 40-10% organic vehicle. Such dispersions are usually of semifluid consistency and are referred to commonly as "pastes".

The pastes are conveniently prepared on a three-roll mill. The viscosity of the pastes is typically within the following ranges when measured at room temperature on Brookfield viscometers at low, moderate and high shear rates:

| Shear Rate (sec$^{-1}$) | Viscosity (Pa.s) | |
| --- | --- | --- |
| 0.2 | 100-5000 - | - |
| | 300-2000 | Preferred |
| | 600-1500 | Most Preferred |
| 4 | 40-400 | - |
| | 100-250 | Preferred |
| | 140-200 | Most Preferred |
| 384 | 7-40 | - |
| | 10-25 | Preferred |
| | 12-18 | Most Preferred |

The amount of organic vehicle utilized is determined mainly by the final desired formulation viscosity and print thickness.

Description of Tests

A. Viscosity Relaxation Test: The viscosity relaxation test was run on a Rheometrics Fluid Spectrometer model 8400. A 25 mm radius parallel plate fixture was used. The paste was subjected to 10 sec$^{-1}$ shear for 5 seconds, then the shear was dropped to 0.1 sec$^{-1}$ and the stress measured for up to 300 seconds. A pseudo first order kinetic expression

$$B = B_i(1-e_r^{kt})$$

where

B = observed stress at time t
B$_i$ = equilibrium stress at time infinity in dynes/cm$^2$
k$_r$ = relaxation rate constant in sec$^{-1}$.

was used to fit the data and determine the two parameters k and B$_i$.

B. Printing Tests: A 4.5 cm by 4.5 cm square of dielectric thick film paste was printed at about 20 µm fired thickness. The pattern contained about 260 400 µm vias, 200 225 µm vias, and 240 125 µm vias. Image analysis and optical microscopy was used to measure the area and size of the vias. Some of the parts were then fired at 850°C in a belt furnace, and the size of the 400 µm vias was remeasured. The sizes before and after firing were compared.
A 4.5 cm by 4.5 cm square of dielectric thick film paste was printed at about 20 µm fired thickness. The pattern was a solid square. The squeegee speed was increased in about 1 cm/sec steps, and visual observations were made as to whether the part was sticking to the screen, or paste was being pulled off the part.

An approximately 13.5 cm by 10 cm print of dielectric thick film paste was printed at about 20 μm fired thickness. A 5 cm by 5 cm area in the center of the dried but unfired part was examined for small pinholes ($\geq$ 25 μm) on an optical microscope using backlighting at $\sim$ 50 x. These pinholes were counted.

A complex part of about 165 cm by 8 cm was printed with a variety of conductor lines and pads. Over selected areas dielectric was overprinted, and the part was cofired. Under an optical microscope at about 50x the parts were examined for the presence of cracks in the dielectric where it was over conductor. The parts were rated excellent, good, fair or poor, depending on how many cracks in the dielectric were observed and how large they were.

A test pattern containing 250 μm lines and spaces, 125 μm lines and spaces, and 125 μm lines and 250 μm spaces was used for the printing evaluation of the conductors. Lines both parallel and perpendicular to the print direction were on the pattern. An optical microscope was used to measure the width of the printed lines. Both dried and fired prints were measured. The test substrates were 5 cm by 5 cm.

C. Water Cleanability Test:

A paste was applied to a 325-mesh screen having a 2-inch by 2-inch pattern (1 inch = 25.4 mm) mounted in a screen printer. After approximately ten prints, the excess paste was removed from the screen. The screen was removed from the printer and cleaned with water dispensed by squeezing a standard laboratory handheld water bottle. After thoroughly cleaning the paste from the screen, the screen was examined with a stereo microscope at 10 x power. The number of screen openings clogged or partially blocked with residue were counted. The presence of any residue at the interface between the screen emulsion and the screen wire was noted. A paste was judged to be water cleanable if no residual paste was found in the screen openings.

EXAMPLES

Sample Preparation

Polyvinylpyrrolidone polymer (PVP) available in several viscosity grades, ranging from very low to very high molecular weight, was obtained as a powder from International Specialty Polymers (Warrington, PA).

Polymer solutions were made by adding the polymer powder to a jar containing the preweighed solvents under high speed agitation using a disc mill. The samples were then heated to 70°C under continued agitation for up to 30 minutes or until a clear solution was obtained.

Pastes were prepared by first premixing the organic vehicle (vehicles, solvents, flow modifiers and/or surfactants) for about one minute. The inorganic powders (silver, glass frit, oxides and/or inorganic fillers) were added sequentially to the vehicle in small portions over a 15 minute period. After complete mixing, the pastes were stirred at about 1500 rpm for 10 minutes and then rollmilled.

Examples 1, 2, 5, 10 and 16 to 22 are not embodiments of the invention, but are useful for understanding the invention.

Examples 1 to 5

A series of five silver pastes were prepared varying the amount of PVP polymer in the organic vehicle to determine printability. The pastes contained 71 wt. % silver, 4 wt. % glass frit and 25 wt. % organic vehicle. The vehicles contained 1, 5, 9, 13 and 17% wt. % polyvinylpyrrolidone (PVP) grade K-90 (viscosity average molecular weight 630,000), respectively, with the balance being the monobutyl ether of diethylene glycol, sold under the tradename Butyl Carbitol. Pastes 1 and 2 which contained 0.25 wt. % and 1.25 wt. % of PVP, respectively, exhibited poor printability due to high tackiness of the paste resulting in screen sticking and poor paste transfer to the substrate. Pastes 3, 4 and 5 provided acceptable printing performance. Paste 5 containing 4.25% PVP, however, did not produce a dense fired film when printed and fired at 850C. All pastes cleaned easily with tap water from the dispersion/mixing equipment and the screen printers.

Example 6

A dielectric paste was prepared containing 61 wt. % glass, 16 wt. % inorganic oxides, and 23 wt. % organic vehicle. The organic vehicle contained 10% PVP K-90 and 90% monobutyl ether of diethylene glycol, sold under the tradename Butyl Carbitol. The total polymer level in the dielectric paste was 2.3 wt. %. The paste printed well and cleaned easily with tap water from the equipment.

## Examples 7 to 9

A silver paste was prepared containing 50 wt. % silver, 2.5 wt. % glass frit, 1 wt. % oxides, and 46.5 wt. % organic vehicle. The organic vehicle contained 7 wt. % PVP (Grade K-90), 1.3 wt. % hydroxypropylcellulose (HPC) Klucel grade GF available from Aqualon (Wilmington, DE), and 91.7 wt. % monobutyl ether of diethylene glycol, sold under the tradename Butyl Carbitol. The total polymer level of the paste was less than 4 wt. %. The HPC is a polymeric rheology modifier useful for thickening the paste without increasing the PVP to levels unacceptable for good burnout. All pastes showed good water cleanability.

| Sample | PVP/HPC Wt. Ratio | kr (sec -1) |
|--------|-------------------|-------------|
| 7 | 8.00 | 0.02 |
| 8 | 5.33 | 0.0075 |
| 9 | 2.50 | 0.038 |

## Examples 10 to 28

A series of silver pastes (Table 1) and dielectric pastes (Table 2) were made using an organic vehicle consisting of PVP (K-90) dissolved in the monobutyl ether of diethylene glycol with various levels of a flow modifier (FM), Floinducer 15 supplied by Raybo Chemical Company (Huntington, WV) in order to adjust the heology required for screen printing such that the relaxation constant kr of the paste composition is within the preferred range 0.01 to 0.1 for high speed screen printing. The silver composition had the same inorganic components as described in Examples 1 through 5 while the inorganic components for the dielectric composition were the same as in Example 6. Cleanability of paste 11 was tested varying the pH of the water. The cleaning solutions tested were deionized water, tap water, an acidic aqueous solution containing 1% acetic acid, and a basic aqueous solution containing 1% sodium carbonate. In all cases the paste was water cleanable from the screen. Pastes cleaned somewhat more easily with the acidic and basic solutions than with either straight tap water or deionized water.

Table 1

| Conductor Compositions | | | | |
|--------|-----------|----------|--------|-----------|
| Sample | Wt. % PVP | Wt. % FM | FM/PVP | kr (sec-1) |
| 10 | 4.6 | 0 | 0 | 1.21 |
| 11 | 3.0 | 1.20 | 0.40 | 0.162 |
| 12 | 3.0 | 2.15 | 0.72 | 0.048 |
| 13 | 3.0 | 2.4 | 0.80 | 0.050 |
| 14 | 3.0 | 2.65 | 0.88 | 0.038 |
| 15 | 3.0 | 3.0 | 1.0 | 0.085 |

Table 2

| Dielectric Compositions | | | | |
|--------|-----------|----------|--------|-----------|
| Sample | Wt. % PVP | Wt. % FM | FM/PVP | kr (sec- 1) |
| 16 | 1.5 | 0.4 | 0.26 | 0.088 |
| 17 | 1.5 | 0.8 | 0.54 | 0.15 |
| 18 | 1.5 | 1.0 | 0.54 | 0.17 |

## Examples 19 to 22

A series of silver pastes containing 81.5 wt.% silver, 3.8 wt.% glass frit, and 14.7 wt.% organic vehicle were prepared with varying levels of the surfactant soya lecithin (Central Soya, Ft. Wayne, IN) The vehicle contained PVP (Grade K-90) and Floinducer® 15 at a 1 to 1 ratio. Addition of surfactant increased the relaxation rate constant kr.

| Sample | Wt. % PVP | Wt. % FM | Wt. % S | Viscosity | kr(sec- 1) |
|--------|-----------|----------|---------|-----------|-----------|
| 19 | 1.6 | 1.6 | 0 | 100 | 0.095 |
| 20 | 1.6 | 1.6 | 0.096 | 80 | 0.10 |
| 21 | 1.6 | 1.6 | 0.19 | 120 | 0.17 |
| 22 | 1.6 | 1.6 | 0.38 | 160 | 0.23 |

Example 23

An enamel paste was made using a polymer solution consisting of 15.0 wt.% PVP (Grade K-90), 2.8 wt.% HPC (Klucel grade GF), and 82.2 wt.% monobutyl ether of diethylene glycol. The paste contained 11 wt.% organic vehicle, 14 wt.% monobutyl ether of diethylene glycol, 33 wt.% black chromium copperoxide pigment, and 42 wt.% of a glass frit. The paste had good printing characteristics and was easily cleaned with water.

**Claims**

1.  A thick film paste composition comprising:

    finely divided inorganic particles dispersed in an organic vehicle comprising

        (a) organic solvent; and
        (b) organic polymer, **characterized in that**

            (i) the polymer is polyvinylpyrrolidone and is contained in the total composition in an amount of 2 - 4% wt. and is dissolved in the organic vehicle; and
            (ii) the organic solvent having an evaporation rate at least 2 times slower than water at 30°C and 1.01325 bar (1 atm); and
            (iii) the total paste composition is water cleanable.

2.  The composition of claim 1 in which the relaxation rate constant kr of the total paste composition is 0.01 - 0.1.

3.  The composition according to any of claims 1 or 2, wherein the polymer is a blend of polyvinylpyrrolidone and a water soluble polysaccharide.

4.  The composition according to any of the preceding claims, wherein the polysaccharide is hydroxypropylcellulose.

5.  The composition according to any of the preceding claims, wherein the particles are conductive metals.

6.  The composition according to any of claims 1 to 4, wherein the particles are resistive oxides.

7.  The composition according to any of claims 1 to 4, wherein the particles are dielectrics.

8.  The composition according to any of the preceding claims, wherein the organic solvent is comprised of mono, di, tri, or tetra ethylene glycols or propylene glycols or mixtures thereof.

9.  The composition according to any of claims 1 to 7, wherein the organic solvent is comprised of tri or di ethers or mono hydroxy ethers including ethyl, propyl or butyl or ether acetates or mixtures thereof, or amines or hydroxy amine or mixtures thereof.

10. The composition according to any of the preceding claims, wherein the organic vehicle further comprises a flow modifier.

11. The composition according to any of the preceding claims, wherein the organic vehicle further comprises a surfactant.

**Patentansprüche**

1. Dickfilmpasten-Zusammensetzung, umfassend:

   feinverteilte anorganische Partikel, dispergiert in einem organischen Medium, umfassend

   (a) organisches Lösungsmittel; und
   (b) organisches Polymer,

   **dadurch gekennzeichnet daß**

   (i) es sich bei dem Polymer um Polyvinylpyrrolidon handelt, das in der Gesamtzusammensetzung in einer Menge von 2 - 4 Gew.-% vorliegt und in dem organischen Medium gelöst ist; und
   (ii) das organische Lösungsmittel eine Verdampfungsrate aufweist, die bei 30 °C und 1,01325 bar (1 atm) mindestens um das Zweifache niedriger ist als Wasser; und
   (iii) die gesamte Pasten-Zusammensetzung mit Wasser abwaschbar ist.

2. Zusammensetzung nach Anspruch 1, bei der die Relaxationsgeschwindigkeits-Konstante kr der gesamten Pasten-Zusammensetzung 0,01 - 0,1 beträgt.

3. Zusammensetzung nach einem der Ansprüche 1 oder 2, worin es sich bei dem Polymer um eine Mischung aus Polyvinylpyrrolidon und einem wasserlöslichen Polysaccharid handelt.

4. Zusammensetzung nach einem der vorangehenden Ansprüche, wobei es sich bei dem Polysaccharid um Hydroxypropylcellulose handelt.

5. Zusammensetzung nach einem der vorangehenden Ansprüche, wobei es sich bei den Teilchen um leitfähige Metalle handelt.

6. Zusammensetzung nach einem der Ansprüche 1 bis 4, wobei es sich bei den Teilchen um Widerstandsoxide handelt.

7. Zusammensetzung nach einem der Ansprüche 1 bis 4, wobei es sich bei den Teilchen um Dielektrika handelt.

8. Zusammensetzung nach einem der vorangehenden Ansprüche, wobei das organische Lösungsmittel aus Mono-, Di-, Tri- oder Tetraethylenglycolen oder Propylenglycolen oder deren Mischungen besteht.

9. Zusammensetzung nach einem der Ansprüche 1 bis 7, wobei das organische Lösungsmittel aus Tri- oder Diethern oder Monohydroxyethern einschließlich von Ethyl, Propyl oder Butyl, oder Etheracetaten oder deren Mischungen oder Aminen oder Hydroxyamin oder deren Mischungen besteht.

10. Zusammensetzung nach einem der vorangehenden Ansprüche, wobei das organische Medium außerdem ein Verlaufmittel enthält.

11. Zusammensetzung nach einem der vorangehenden Ansprüche, wobei das organische Medium außerdem ein Tensid umfaßt.


**Revendications**

1. Composition de pâte à couche épaisse comprenant :

   des particules inorganiques finement divisées dispersées dans un véhicule organique comprenant :

   (a) un solvant organique ; et
   (b) un polymère organique, **caractérisé en ce que**

   (i) le polymère est de la polyvinylpyrrolidone et est contenu dans la composition totale dans une quantité de 2-4% en poids et est dissous dans le véhicule organique ; et

(ii) le solvant organique a une vitesse d'évaporation au moins deux fois plus lente que celle de l'eau à 30°C et 1,01325 bar (1 atm) ; et

(iii) la composition de pâte totale est nettoyable à l'eau.

2. Composition selon la revendication 1, dans laquelle la constante de vitesse de relaxation kr de la composition de pâte totale est 0,01-0,1.

3. Composition selon l'une quelconque des revendications 1 ou 2, dans laquelle le polymère est un mélange de polyvinylpyrrolidone et d'un polysaccharide soluble dans l'eau.

4. Composition selon l'une quelconques des revendications précédentes, dans laquelle le polysaccharide est l'hydropropylcellulose.

5. Composition selon l'une quelconque des revendications précédentes, dans laquelle les particules sont des métaux conducteurs.

6. Composition selon l'une quelconque des revendications 1 à 4, dans laquelle les particules sont des oxydes résistants.

7. Composition selon l'une quelconque des revendications 1 à 4, dans laquelle les particules sont des diélectriques.

8. Composition selon l'une quelconque des revendications précédentes, dans laquelle le solvant organique est constitué de mono-, di-, tri- ou tétra-éthylèneglycols ou propylèneglycols ou des mélanges de ceux-ci.

9. Composition selon l'une quelconque des revendications 1 à 7 dans laquelle le solvant organique est constitué de tri- ou diéthers ou de monohydroxyéthers incluant des acétates d'éthyle, de propyle ou de butyle ou d'éther ou des mélanges de ceux-ci, ou des amines ou hydroxyamines ou mélanges de celles-ci.

10. Composition selon l'une quelconque des revendications précédentes, dans laquelle le véhicule organique comprend en outre un modificateur d'écoulement.

11. Composition selon l'une quelconque des revendications précédentes, dans laquelle le véhicule organique comprend en outre un tensioactif.